# EUROPÄISCHE PATENTANMELDUNG

(11) **EP 1 947 612 A1**
(43) Veröffentlichungstag der Anmeldung: **23.07.2008**
(21) Anmeldenummer: 08000760.2
(22) Anmeldetag: 16.01.2008
(51) Int. Cl.: G07D 7/00, G06K 19/077, H01Q 1/22

(54) **Vorrichtung zum Auslesen von Ausweisdokumenten**

(30) Priorität: 17.01.2007 DE 202007000708 U
(71) Anmelder: EuroDelta GmbH, 8703 Erlenbach/Zürich (CH)
(72) Erfinder: Neher, Rolf Gustav, 8703 Erlenbach (CH)
(74) Vertreter: Geitz Truckenmüller Lucht

(57) **Zusammenfassung**

1. Vorrichtung zum Auslesen von Ausweisdokumenten

Mit der Einführung neuer elektronischer Ausweisdokumente ergibt sich aufgrund der bislang unerprobten Haltbarkeit der verwendeten Speichermittel, etwa von RFID-Chips, das Problem, dass etwa vor dem Antritt einer Reise keine Sicherheit bezüglich der Gültigkeit oder auch der Funktion der benötigten Ausweisdokumente besteht. Dem soll die vorliegende Erfindung abhelfen.

Dies gelingt mithilfe der erfindungsgemäßen Vorrichtung, welche Ausweisdokumente inhaltlich prüfen, aber auch deren Funktionstüchtigkeit oder -untüchtigkeit, insbesondere hinsichtlich elektronischer Speichermittel, feststellen kann.

Echtheits- und Funktionsprüfungen bei Ausweisdokumenten

## Beschreibung

Die Erfindung betrifft eine Vorrichtung zum Auslesen von Ausweisdokumenten, insbesondere von elektronischen Ausweisdokumenten.

Es werden in neuerer Zeit Ausweisdokumente immer häufiger mit elektronischen Speichern versehen, auf denen die zur Identifikation des Besitzers erforderlichen Daten gespeichert werden. Solche Speicher ermöglichen es, das Ausweisdokument zum einen rasch vollständig auszulesen und zu überprüfen, zum anderen ermöglichen sie es, durch einheitliche Datensätze, standardisierte Daten aus demselben Speicher durch den Einsatz entsprechender landessprachlicher Lesegeräte in verschiedenen Sprachen darzustellen. So ist es beispielsweise bei Flugreisen möglich, ein Ausweisdokument sowohl am Startflughafen als auch am Zielflughafen in der jeweiligen Landessprache auszulesen und zu überprüfen.

Jedoch bringt diese zunehmende Elektrifizierung der Ausweisdokumente das Problem mit sich, dass der Besitzer des jeweiligen Ausweisdokuments kaum einen Einblick in die gespeicherten Daten nehmen kann. Insbesondere kann er dadurch nicht feststellen, ob die Daten noch einwandfrei auslesbar sind und insbesondere ob sie noch aktuell sind. So kann es geschehen, dass ein etwa in der Geldbörse mitgeführter Personalausweis, welche einen Speicherchip, etwa einen RFID-Chip, aufweist, durch die mit dieser Lagerung einhergehenden Biegung in seiner Funktion beeinträchtigt oder durch eine unbeabsichtigte Faltung sogar geknickt und zerbrochen wird. Nachdem der Chip durch bloßes Betrachten nicht auf seine Funktion hin überprüft wird, wird in dem genannten Beispiel am Reiseziel, gegebenenfalls sogar bereits am Startflughafen, in jedem Fall aber verspätet, festgestellt, dass das benötigte Ausweisdokument nicht zur Verfügung steht.

Daher liegt der Erfindung die Aufgabe zu Grunde, eine Vorrichtung zum Auslesen von Ausweisdokumenten, insbesondere von elektronischen Ausweisdokumenten, zu schaffen, welche dem Besitzer eines solchen elektronischen Ausweisdokuments die Möglichkeit gibt, etwa benötigte Dokumente vor Reiseantritt zu prüfen.

Dies gelingt durch eine Vorrichtung zum Auslesen von Ausweisdokumenten gemäß den Merkmalen des Hauptanspruchs. Weitere sinnvolle Ausgestaltungen können den Unteransprüchen entnommen werden.

Erfindungsgemäß kann die Funktion eines elektronischen Ausweisdokuments insbesondere dadurch sichergestellt werden, dass ein entsprechendes Lesegerät eingesetzt wird, welches den im Ausweisdokument enthaltenen Speicher auslesen kann. Beim Auslesen des Speichers eines Ausweisdokuments kann gleichzeitig eine Funktionsprüfung des Speichers durchgeführt werden, bei der etwa alle möglichen Funktionen des Speichers durch ein beispielhaftes Auslesen angesprochen werden. Auf diese Weise kann der Benutzer des Ausweisdokuments sicherstellen, dass alle auf dem Ausweis gespeicherten Daten auch elektronisch abrufbar sind und im Bedarfsfall zur Verfügung stehen. Ergänzend kann etwa eine Echtheitsprüfung des Ausweisdokuments durchgeführt werden, um sicherzustellen, dass es sich um ein amtlich ausgestelltes, legales Dokument handelt, und dass dieses auch zum Abfragezeitpunkt gültig ist.

In konkreter Ausgestaltung kann ein solches Lesegerät etwa ein RFID-Chip-Leser sein, welcher einen in einem Ausweisdokument enthaltenen RFID-Chip auslesen kann. Solche Chips werden zunehmend häufiger für die Identifikation von Gegenständen eingesetzt, etwa auch für die Datenspeicherung in Ausweisdokumenten. Der Vorteil des RFID-Chips liegt darin, dass ein Energiespeicher für diesen Chip nicht erforderlich ist. Vielmehr wird durch ein angelegtes Magnetfeld Energie in eine dem RFID-Chip zugeordnete Magnetfeldspule induziert und der RFID-Chip auf diese Weise mit Strom versorgt. Mithilfe der so übertragenen Energie kann der RFID-Chip die auf dem Chip gespeicherten Daten an die Leseeinheit zurück übertragen. Dies stellt eine einfache und günstige Methode dar, wenngleich - wie oben beschrieben - eine gewisse Problematik darin liegen kann, dass solche RFID-Chips im Zusammenhang mit Ausweisdokumenten eine mögliche Fehlerquelle darstellen.

Soweit ein erfindungsgemäßes Lesegerät eingesetzt wird, kann es durchaus dazu kommen, dass auch ein Ausweisdokument in das Lesegerät eingelegt wird, welches nicht mit einem elektronischen Speicher ausgerüstet ist. Mit Vorteil erkennt das Lesegerät einen solchen nichtelektronischen Ausweis selbsttätig und greift gegebenenfalls auf andere Erkennungsmethoden, welche ihm zur Verfügung stehen, zurück.

Dementsprechend kann dem erfindungsgemäßen Lesegerät etwa ein Scanner zur Erfassung der Oberfläche zur Verfügung stehen, mit dem Merkmale des Ausweisdokuments wie etwa die Schrift, biometrische Daten oder auch Sicherheitsmerkmale des Ausweisdokuments erfasst und überprüft werden können. Zum Auslesen der Schrift kann das Lesegerät ergänzend mit einer OCR-Software ausgestattet sein, welche eine Interpretation der auf dem Ausweis befindlichen Schrift ermöglicht.

Zur Erweiterung des Funktionsumfangs der erfindungsgemäßen Vorrichtung kann dieser eine Schreibeinheit oder eine Schreib-Leseeinheit zugeordnet sein, mithilfe derer Eintragungen in den Speicher des Ausweisdokuments vorgenommen werden können. Eine solche Ausführung der Erfindung ist in der Praxis besonders für Ämter oder Bürgerbüros geeignet, welche ihrerseits Eintragungen in den Ausweisdokumenten vornehmen können müssen.

Der Vorrichtung können zudem mit Vorteil Erkennungsmittel für biometrische Daten zugeordnet sein, etwa Kameras oder Fingerabdrucksensoren, welche der Vorrichtung mittels einer Datenverbindung anverbunden sind. Ebenfalls kann es von Vorteil sein, wenn die erfindungsgemäße Vorrichtung, etwa über eine Internetschnittstelle, mit einem amtsseitigen Server in Datenverbindung steht, über welchen die Daten des Ausweisdokuments mit den amtsseitig vorgehaltenen Daten verglichen werden können. Dabei kann einerseits eine Identifikation einer Person erfolgen, also ein 1:N-Vergleich, oder eine Verifizierung einer Person als Inhaber eines Ausweisdokuments, also ein 1:1-Vergleich, vorgenommen werden.

Zur Erhöhung der Sicherheit kann ergänzend auch ein Vergleich amtsseitig gespeicherter Datensätze vorgenommen werden, um herauszufinden, ob eine Mehrfachregistrierung einer Person vorgenommen worden ist. Zudem sind der Lesereinrichtung mit Vorteil Verifizierungsalgorithmen zugänglich, mithilfe derer Fälschungen von Ausweisdokumenten als solche erkennbar sind, indem die abgerufenen Daten auf ihre Verschlüsselung hin überprüft werden.

Die vorstehend beschriebene Erfindung wird im Folgenden anhand eines Ausführungsbeispiels näher erläutert.

Es zeigen
- Figur 1: ein Ausweisdokument mit einem RFID-Chip in einer Draufsicht, wobei der RFID-Chip im Inneren des Ausweisdokuments durch Vergrößerung hervorgehoben ist, und
- Figur 2: Eine erfindungsgemäße Vorrichtung mit einem eingelegten Ausweisdokument in einer Ausleseposition in perspektivischer Darstellung.

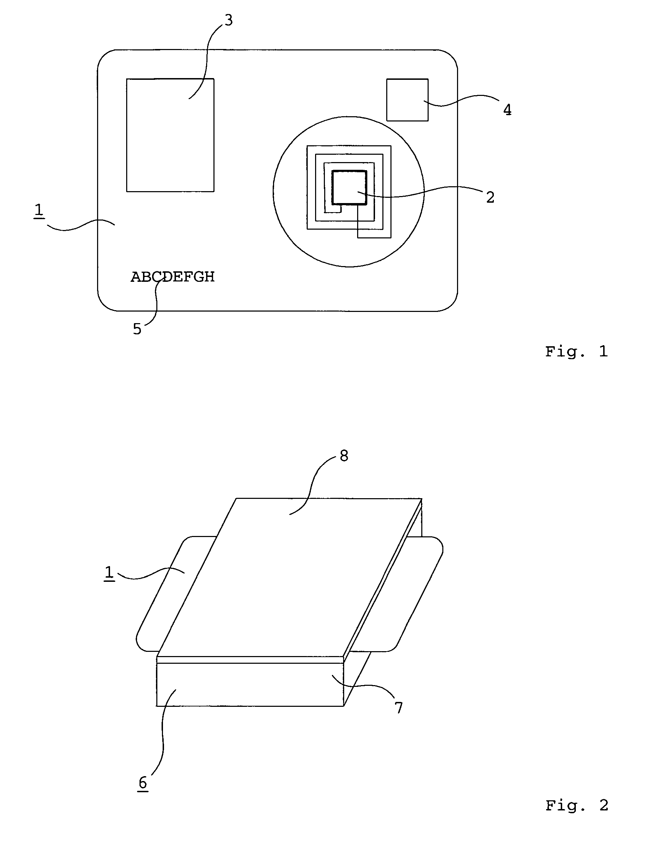

Figur 1 zeigt ein Ausweisdokument 1 in der Art eines Personalausweises, welches über biometrische Daten 3 in Form eines Passbilds verfügt. Ferner ist das vorliegende Ausweisdokument 1 mit einem Schriftzug 5 ausgestattet, welcher den Namen des Besitzers, einen Auszug der im Ausweisdokument 1 gespeicherten Daten, sowie eine Identifikationsnummer enthält. Ferner weist das vorliegende Ausweisdokument 1 Sicherheitsmerkmale 4 auf, etwa Hologramme, Tiefdruck, Feindruck oder Gravuren. Im Inneren des Ausweisdokuments 1 ist ein RFID-Chip vorgesehen, welcher über eine Spule zur Energieaufnahme verfügt. Wird ein solchermaßen ausgerüstetes Ausweisdokument 1 in einer Ausleseposition bezüglich einer erfindungsgemäßen Vorrichtung, also eines Ausweislesegeräts 6, gebracht, so wird das Ausweislesegerät 6 zunächst feststellen, dass ein elektronisches Ausweisdokument 1 vorliegt, indem es den im RFID-Chip 2 gespeicherten Datensatz ausliest. Auf diese Weise wird die Funktionalität des Ausweisdokuments 1 geprüft, welche durch die bloße Ansicht desselben nicht erkennbar wäre. Das Ausweislesegerät 6, welches in Figur 2 näher beschrieben wird, wird für eine solche Funktionsprüfung zunächst ein Signal aussenden, welches als energiereiches Signal von der Spule des RFID-Chips aufgenommen wird und welches die zum Auslesen und Rücksenden der auf dem RFID-Chip gespeicherten Informationen erforderliche Energie liefert. Nachdem ein solcher RFID-Chip, insbesondere die diesem zugeordnete Spule, aufgrund der flächigen Ausgestaltung des Ausweisdokuments 1 leicht beschädigt werden kann, ist es sinnvoll, vor dem Gebrauch des Ausweisdokuments 1 dieses auf seine Funktion hin zu überprüfen.

Dieses wird ermöglicht durch ein Ausweislesegerät 6, wie es beispielhaft in Figur 2 dargestellt ist. Ein solches Ausweislesegerät 6 weist eine Leseeinrichtung mit Scanner 7 auf, auf welchen ein auszulesendes und zu prüfendes Ausweisdokument 1 aufgelegt wird. Es wird auf diese Weise eine Ausleseposition gebracht, in der sowohl der im Ausweisdokument 1 vorgehaltene RFID-Chip 2 ausgelesen werden kann, als auch gegebenenfalls mithilfe des Scanners biometrische Daten 3, Sicherheitsmerkmale 4 oder Schrift 5 erkannt werden können. Zur Fixierung des Ausweisdokuments 1 ist dem Ausweislesegerät 6 ein Deckel 8 zugeordnet, welcher das Ausweisdokument 1 während des Ausleseprozesses in einer definierten Position hält und für den Scanner einen neutralen Hintergrund bietet.

Die von der Vorrichtung eingelesenen Daten können anschließend dahingehend ausgewertet werden, dass ein 1:N-vergleich angestellt wird, also über eine Datenverbindung zu einem Server, etwa einem Amtsserver, hergestellt und die eingelesenen Daten mit der Datenbank abgeglichen werden, oder dass ein 1:1-Vergleich angestellt wird, indem die biometrischen Daten 3 des Ausweisdokuments 1 mit vor Ort einzulesenden Daten des Besitzers des Ausweisdokuments 1, etwa einem Fingerabdruck, verglichen werden.

Vorliegend ist somit eine Vorrichtung zum Auslesen von Ausweisdokumenten, insbesondere von elektronischen Ausweisdokumenten, beschrieben, welche es in einfacher Weise ermöglicht, elektronische Ausweisdokumente vor deren Gebrauch auf ihre Funktion hin beziehungsweise gegebenenfalls auf ihre Echtheit oder Gültigkeit hin zu prüfen, und somit zu vermeiden, im Bedarfsfall nicht über gültige Ausweisdokumente zu verfügen.

### BEZUGSZEICHENLISTE

- 1: Ausweisdokument
- 2: RFID-Chip
- 3: Biometrische Daten
- 4: Sicherheitsmerkmal
- 5: Schrift
- 6: Ausweislesegerät
- 7: Leseeinrichtung mit Scanner
- 8: Deckel

## Patentansprüche

1. Vorrichtung zum Auslesen von Ausweisdokumenten, insbesondere von elektronischen Ausweisdokumenten, umfassend eine Leseeinheit (7), welche in eine Ausleseposition bezüglich eines Ausweisdokuments (1) bringbar und eine Durchführung einer Echtheitsprüfung und/oder einer Funktionsprüfung des Ausweisdokuments (1) ermöglicht.

2. Vorrichtung gemäß Anspruch 1, **dadurch gekennzeichnet, dass** als Leseeinheit (7) ein RFID-Chip-Leser vorgesehen ist, welcher in der Ausleseposition zum Auslesen eines dem Ausweisdokument (1) zugeordneten RFID-Chips (2) geeignet ist.

3. Vorrichtung gemäß einem der Ansprüche 1 oder 2, **dadurch gekennzeichnet, dass** mithilfe der Leseeinheit (7) die, vorzugsweise selbsttätige, Erkennung eines elektronischen Ausweisdokuments (1) ermöglicht ist.

4. Vorrichtung gemäß einem der vorhergehenden Ansprüche, **dadurch gekennzeichnet, dass** der Vorrichtung ein Scanner (7) zur Erfassung der Oberfläche und/oder einer Beschriftung (5) und/oder von biometrischen Daten (3) auf dem Ausweisdokument (1) zugeordnet ist.

5. Vorrichtung gemäß Anspruch 4, **dadurch gekennzeichnet, dass** mithilfe des Scanners (7) und einer OCR-Software ein Auslesen der Schrift (5) auf dem Ausweisdokument (1) ermöglicht ist.

6. Vorrichtung gemäß einem der Ansprüche 4 oder 5, **dadurch gekennzeichnet, dass** mithilfe des Scanners (7) eine Erkennung von Sicherheitsmerkmalen (4) des Ausweisdokuments (1) vornehmbar ist.

7. Vorrichtung gemäß einem der vorhergehenden Ansprüche, **dadurch gekennzeichnet, dass** die Vornahme einer Eintragung in ein elektronisches Ausweisdokument (1) mittels einer Schreibeinheit oder einer Schreib-Leseeinheit in einer Schreibposition bezüglich des Ausweisdokuments (1) ermöglicht ist.

8. Vorrichtung gemäß einem der vorhergehenden Ansprüche, **dadurch gekennzeichnet, dass** die Vorrichtung in Datenverbindung mit Erkennungsmitteln für biometrische Daten (3) steht.

9. Vorrichtung gemäß Anspruch 8, **dadurch gekennzeichnet, dass** ein solches Erkennungsmittel ein AFIS (Automatic Fingerprint Identification System, automatisches Fingerabdruck-Erkennungs-System) ist.

10. Vorrichtung gemäß einem der Anspruch 8 oder 9, **dadurch gekennzeichnet, dass** die Vorrichtung mit einer Amtssoftware, etwa über eine Internetschnittstelle, in Datenverbindung steht.

11. Vorrichtung gemäß Anspruch 10, **dadurch gekennzeichnet, dass** zur Echtheitsprüfung ein Vergleich in dem Ausweisdokument (1) gespeicherter Daten mit amtsseitig gespeicherten Daten vornehmbar ist.

12. Vorrichtung gemäß Anspruch 11, **dadurch gekennzeichnet, dass** eine Identifizierung einer Person, also ein 1:N-Vergleich, oder eine Verifizierung einer Person als Inhaber eines Ausweisdokuments (1), also ein 1:1-vergleich, vornehmbar ist.

13. Vorrichtung gemäß einem der Ansprüche 10 bis 12, **dadurch gekennzeichnet, dass** aufgrund des Vergleichs amtsseitig gespeicherter Datensätze Mehrfachregistrierungen feststellbar sind.

14. Vorrichtung gemäß einem der Ansprüche 10 bis 13, **dadurch gekennzeichnet, dass** mithilfe von Verifizierungsalgorithmen Fälschungen von Ausweisdokumenten (1) feststellbar sind.
